# EUROPEAN PATENT SPECIFICATION

(11) **EP 2 549 248 B1**
(45) Date of publication and mention of the grant of the patent: **17.04.2019**
(21) Application number: 12005076.0
(22) Date of filing: 09.07.2012
(51) Int. Cl.: G01J 1/18, G01J 1/46, B60S 1/08

(54) **Rain drop detection device having a state detecting unit**
Regentropfen-Messgerät mit einer Zustandserfassungseinheit
Dispositif de détection de gouttes de pluie employant une unité de détection d'état

(30) Priority: 19.07.2011 JP 2011157366
(43) Date of publication of application: 23.01.2013
(73) Proprietor: Valeo Japan Co., Ltd., Saitama 360-0193 (JP)
(72) Inventor: Ohata, Tomoyuki, Tokyo 143-8521 (JP); Touju, Masaaki, Tokyo 143-8521 (JP)
(74) Representative: Oppermann, Frank

(56) References cited:
- EP-A1- 1 640 705

## Description

### CROSS-REFERENCE TO RELATED APPLICATION

This application claims priority under 35 USC 119 from Japanese Patent Application No. 157366/2011 filed on July 19, 2011.

### BACKGROUND OF THE INVENTION

### Field of the Invention

The present invention relates to a state detecting device which receives light emitted from a light-emitting element with a light-receiving element and detects a state of a detection target existing between the light-emitting element and the light-receiving element based upon the received light signal.

### Description of the Related Art

For example, Japanese Patent Laid-Open Publication No. 2004-340712 disclose a rain drop detecting device as a state detecting device based upon a received light signal. In this rain drop detecting device, a window shield is irradiated with pulse light from a light-emitting element and a light-receiving element receives the reflected light, which is subjected to signal processing, thereby detecting a presence/absence state of rain drops on the window shield. Incidentally, in such a rain drop detecting device, since a sensor unit incorporating the light-emitting element and the light-receiving element therein is assembled in the window shield, not only light emitted from the light-emitting element and reflected on the window shield is incident upon the light-receiving element, but also, it is unavoidable for outside light from an outside of a vehicle such as direct sunshine to be incident upon the light-receiving element through the window shield. As to the output of the light-receiving element, outside optical elements as noises are superimposed on pulse optical elements. Frequency components of the outside light include both direct-current components and alternate-current components due to a temporal alteration of an obstacle existing between the Sun and the sensor, such as sunshine filtering through foliage, and the outside light increases in intensity with lower frequency.

As a result, in a case where the output by converting light-received current of the light-receiving element into a voltage increases to exceed a saturation voltage, signal components of the pulse light are collapsed, making it difficult to make a correct determination of a rainfall situation. Therefore in the rain drop detecting device disclosed in Japanese Patent Laid-Open Publication No. 2004-340712, an outside optical-element reducing circuit is additionally attached to a current to voltage conversion circuit, and also a band pass filter/amplifying circuit is provided after the current to voltage conversion circuit to perform frequency separation to the outside optical element, thus reducing the outside optical element. In this manner, the converted voltage is processed not to exceed the saturation voltage, and thereafter the peak holding signal is inputted to a microcomputer.

However, the conventional state detecting device has the following problems. First, the outside optical-element reducing circuit extracts outside optical elements from the signal converted into the voltage, and the extracted outside optical elements are then converted into current, which is feed-backed to an input side of the current to voltage conversion circuit. Therefore the state detecting device is expensive. Second, since the current of direct-current components can be eliminated only to a ratio of feedback current to the input current in the current to voltage conversion circuit including the above outside optical-element reducing circuit, a gain in the current to voltage conversion circuit can not be sufficiently increased for preventing the output from being saturated, and more amplifying circuits are further required until the voltage is inputted to the peak hold circuit at the latter stage. Third, the output of the band pass filter is directly connected to a non-reverse input terminal of an operational amplifier forming part of the amplifying circuit or the peak hold circuit, and a high pass filter included in the band pass filter is biased to a ground electric potential as a negative power source of the operational amplifier. Therefore, when the undershoot generated at the time a pulse signal passes through the high pass filter is equal to or less than the minimum input voltage of the operational amplifier (ground electric potential or less), since the operational amplifier does not perform a normal operation or is possibly destroyed for a period where the undershoot is generated, a very expensive analogue switch is provided to prevent input of the undershoot portion into the operational amplifier. Fourth, not illustrated, since the peak hold signal can not be directly inputted to the microcomputer or the like, an output buffer is in fact required before the microcomputer, which leads to an increase in cost. Therefore it is currently difficult to adopt the conventional state detecting device immediately. In the state detection of the detection target by the light-receiving signal, not only in a case of the rain drop detecting device exemplified above, but also in various types of state detecting devices, the mixing of the outside light can not be avoided. Therefore for many detecting devices, there exist problems of achieving an increase in high accuracy in detection, as well as a reduction in cost.

Similarly relevant information can be found in EP1640705.

### SUMMARY OF THE INVENTION

Accordingly, the present invention is made in view of the above described problems, and the present invention has an object of providing a state detecting device which can effectively reduce outside optical elements to detect a state of a detection target with high accuracy, and can be realized more inexpensively.

For this purpose, according to an aspect of the present invention, a state detecting device comprises a light-emitting element, and a light-receiving element for receiving pulse light emitted from the light-emitting element, wherein a state of a detection target existing between the light-emitting element and the light-receiving element is detected based upon a light-receiving signal in which outside optical elements are superimposed on pulse optical elements outputted from the light-receiving element, the state detecting device comprising:
a current to voltage conversion circuit for converting the light-receiving signal from current to voltage;
a high pass filter circuit for extracting the pulse optical element from the light-receiving signal;
a peak hold circuit for peak-holding the light-receiving signal passing through the current to voltage conversion circuit and the high pass filter circuit;
a non-reverse amplifying circuit for amplifying output of the peak hold circuit;
state determining means for determining the state of the detection target based upon a peak value of the light-receiving signal amplified in the non-reverse amplifying circuit; and
offset means for offsetting the light-receiving signal such that an undershoot generated by the passing of the light-receiving signal through the high pass filter circuit is equal to or more than a minimum input voltage which can be inputted to the peak hold circuit, wherein
the non-reverse amplifying circuit includes an offset calibrating unit to once more offset the light-receiving signal in a direction of absorbing the offset, thus amplifying the output of the peak hold circuit.

According to the aspect of the present invention, the light-receiving signal is offset such that the undershoot of the light-receiving signal is equal to or more than the minimum input voltage which can be inputted to the peak hold circuit, and the offset of the light-receiving signal is absorbed after passing through the peak hold circuit. Therefore a blocking circuit using an expensive analogue switch for blocking the input of the undershoot or the like becomes unnecessary. In addition, the voltage buffer is also unnecessary by providing the non-reverse amplifying circuit after the peak hold circuit, and a peak value of the amplified light-receiving signal can be inputted to the state determining means. Therefore the state of the detection target can be detected inexpensively, and with high accuracy along with a reduction of the outside optical element by the high pass filter circuit.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
FIG. 1 is a block diagram showing the configuration of a state detecting device according to an embodiment in the present invention;
FIG. 2 is a structure conceptual diagram showing a sensor unit in FIG. 1;
FIG. 3 is a diagram showing a special circuit configuration example in a light-receiving signal processing system in the embodiment;
FIGS. 4A and 4B are waveform graphs each showing a change of a signal state in a major part;
FIGS. 5A and 5B are waveform graphs each showing a change of a signal state in a major part;
FIG. 6 is a waveform graph showing a change of a signal state in a major part;
FIG. 7 is a diagram showing an output waveform of a current to voltage conversion circuit in a case where outside optical elements are removed only by a current high pass filter circuit;
FIG. 8 is a diagram showing a modification of the current high pass filter circuit; and
FIG. 9 is a diagram showing a modification of a voltage high pass filter circuit.

### DESCRIPTION OF THE PREFERRED EMBODIMENTS

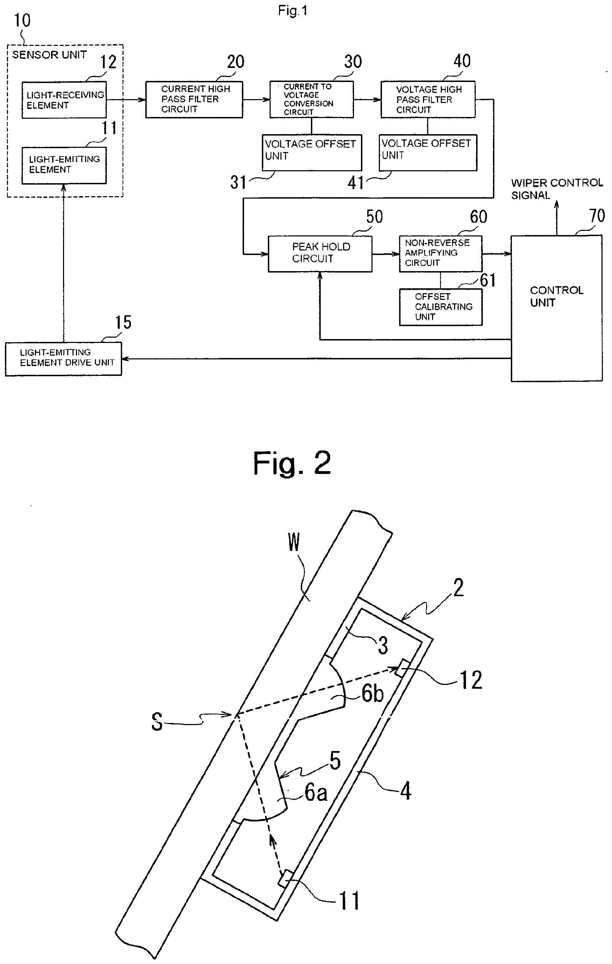

Hereinafter, a rain drop detecting device according to an embodiment in the present invention will be explained with reference to the accompanying drawings. FIG. 1 is a block diagram showing the configuration of a state detecting device according to an embodiment in the present invention. FIG. 2 is a conceptual diagram showing an arrangement configuration of a sensor unit. First, the configuration of a sensor unit 10 in a rain drop detecting device 1 will be explained with reference to FIG. 2. The sensor unit 10 is formed as a unit of a casing having a front wall 3 and a rear wall 4 opposing with each other and is mounted to an inner surface of a window shield W for a vehicle. That is, a prism 5 is provided in a window formed in the front wall 3, and a light -emitting element 11 and a light-receiving element 12 are installed in the rear wall 4. The light-emitting element 11 and the light-receiving element 12 are arranged such that each optical axis is directed toward a predetermined section (detection surface) S of the window shield W, and light emitted from the light-emitting element 11 is reflected through the prism 5 on an outer side boundary surface of the predetermined section S in the window shield W, which is received in the light-receiving element 12. The prism 5 is provided with lens portions 6a and 6b on an optical path from the light-emitting element 11 to the light-receiving element 12. The sensor unit 10 is mounted by tightly attaching the prism 5 on the inner surface of the window shield W by a transparent adhesive agent transparent in the light-emitting wavelength of the light-emitting element 11 and having a refractive index equivalent to a refractive index of the prism5 or the window shield W.

Next, the configuration of an entire rain drop detecting device as the state detecting device will be explained with reference to FIG. 1. The light-emitting element 11 is formed of a light-emitting diode (LED) and is connected to a light-emitting element drive unit 15, which is connected to a control unit 70 composed of a microcomputer. The light-emitting element drive unit 15 receives a signal from the control unit 70 to drive the light-emitting element 11 to output pulse light. The light-receiving element 12 is formed of a photo diode (PD) and is connected to a current high pass (high region passing) filter circuit 20. A current to voltage conversion circuit 30, a voltage high pass filter circuit 40, a peak hold circuit 50 and a non-reverse amplifying circuit 60 are connected to the current high pass filter circuit 20 in that order. An output side of the non-reverse amplifying circuit 60 is connected to the control unit 70.

The light-received current outputted from the light-receiving element 12, as described above, includes pulse optical elements and outside optical elements. The outside optical element is in a low frequency region including direct current and is mostly occupied particularly by direct-current components. The current high pass filter circuit 20 removes the outside optical element by cutting off components having a predetermined cutting frequency or less from the light-received current of the light-receiving element 12. The current having passed through the high pass filter circuit 20 includes the pulse optical element (pulse light current) and the undershoot generated by its passing. The current having passed through the current high pass filter circuit 20 is converted into a voltage by the current to voltage conversion circuit 30, but the output voltage is offset by a voltage offset unit 31 additionally attached to the current to voltage conversion circuit 30 to perform the current to voltage conversion such that the converted output is not saturated by including the pulse optical element and the undershoot.

The voltage high pass filter circuit 40 further removes alternate-current components of the outside light remaining in the output voltage of the current to voltage conversion circuit 30. Since the undershoot is also generated at the time the voltage passes through the voltage high pass filter circuit 40, in the voltage high pass filter circuit 40 the output voltage is offset by an additionally attached voltage offset unit 41 for filtering such that the output voltage is equal to or more than the minimum input voltage (the maximum input voltage or less) in the peak hold circuit 50.

The peak hold circuit 50 holds a peak value of the offset light-receiving signal. The voltage to be inputted from the voltage high pass filter circuit 40 to the peak hold circuit 50 is a voltage obtained by adding the offset voltage through the voltage offset unit 31 and the voltage offset unit 41 to the pulse optical element and the undershoot, but a peak hold release signal from the control unit 70 to the peak hold circuit 50 is controlled to change from ON (release of peak hold) to OFF (hold of peak hold) at timing of a pulse light-emitting start in synchronization with timing of the pulse light-emitting of the light-emitting element 11. After a predetermined time until the under shoot is attenuated at a minimum elapses, the peak hold release signal is controlled to change from OFF (hold of the peak hold) to ON (release of the peak hold), and the voltage which is not affected by the undershoot is peak-held in the peak hold circuit 50.

The non-reverse amplifying circuit 60 receives input of the output (peak value of the light-receiving signal) in the peak hold circuit 50. An offset calibrating unit 61 provided in the non-reverse amplifying circuit 60 once more offsets the inputted signal in such a manner as to absorb an amount corresponding to the offset voltage by the previous voltage offset unit 41, and thereafter the non-reverse amplifying circuit 60 amplifies only a peak value of the pulse optical element to a predetermined amplitude level. The control unit 70 performs control of each unit inside the rain drop detecting device 1 and inputs the amplified peak value therein, generating rain drop information based upon the incorporated peak value.

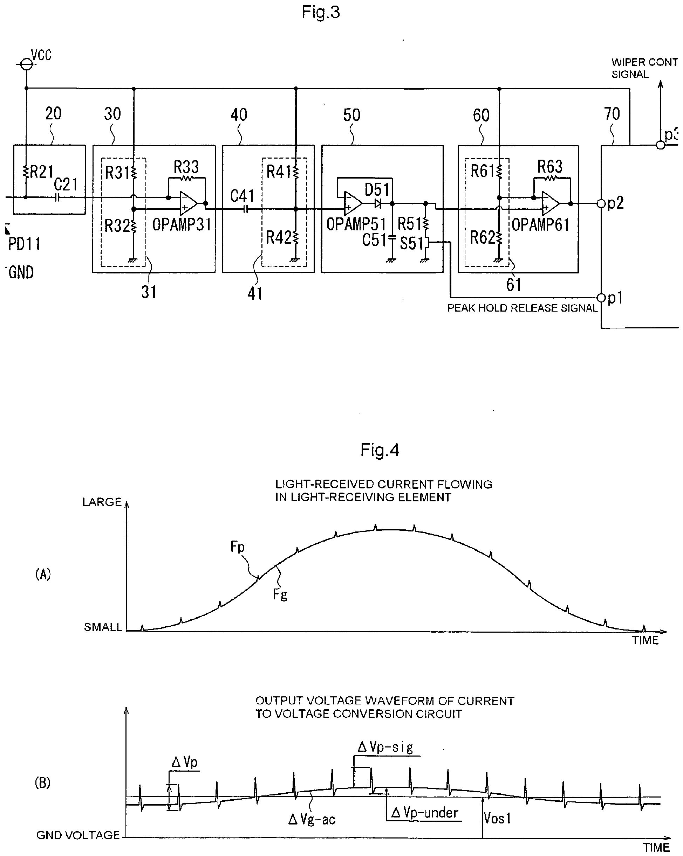

FIG. 3 is a diagram showing a special circuit configuration in the light-receiving signal processing system in the aforementioned rain drop detecting device 1, and FIG. 4A to FIG. 6 each show a change of a signal state in the major part. The photo diode PD 11 as the light-receiving element 12 has an anode connected to a ground GND and a cathode connected to one end of a resistance R21 the other end of which is connected to a power source voltage VCC of, for example, 5V in the current high pass filter circuit 20, thus being subjected to reverse bias. When the photo diode PD 11 receives light, light-received current flowing in a direction from the cathode to the anode is generated, which flows out from the anode to the ground GND.

The current high pass filter circuit 20 is provided with the aforementioned resistance R21 and a condenser C21 one end of which is connected to a connecting point between the other end of the resistance R21 and the cathode of the photo diode PD11. The current high pass filter circuit 20 is configured such that the other end of the condenser C21 is connected to a reverse input terminal of an operational amplifier OPAMP31, which will be described later, of the latter current to voltage conversion circuit 30 , thus operating as an active current high pass filter. A resistance value Ra of the resistance R21 is selected with an allowance such that an electric potential difference due to direct-current current by outside light or the like flowing in the resistance does not exceed the power source voltage VCC. A capacity value Ca of the condenser C21 is selected such that Ca = 1/(2πfcRa) is established by setting a cutting-off frequency fc of the high pass filter allowing passing of alternate-current components by pulse light from the light-emitting element 11. In this manner, a primary high pass current filter by the resistance value Ra and the capacity value Ca is configured.

Direct-current components of the light-received current in the photo diode PD11 flow in the resistance R21, and alternate-current components thereof flow in the condenser C21. A flow direction of each component follows a flow in the photo diode PD11. The direct-current and alternate-current components respectively flow from the resistance R21 to the photo diode PD11 (cathode thereof) and from the latter current to voltage conversion circuit 30 via the condenser C21 to the photo diode PD11 (cathode thereof).

The current to voltage conversion circuit 30 is provided with an operational amplifier OPAMP31, and an reverse input terminal (-)thereof is connected to the condenser C21 in the current high pass filter circuit 20 as described above. In addition, a resistance R33 is connected between an output terminal and the reverse input terminal of the operational amplifier OPAMP31, and the current outputted from the output terminal flows out through the resistance R33 to the current high pass filter circuit 20. An electric potential difference (amplitude) ΔVp by the current flowing in the resistance R33 includes pulse optical elements ΔVp - sig and undershoots ΔVp - under.

The voltage offset unit 31 is configured of a resistance R31 connected to a non-reverse input terminal (+) of the operational amplifier OPAMP31 and the power source voltage VCC, and likewise a resistance R32 connected between the non-reverse input terminal and the ground GND. A voltage obtained by adding the aforementioned electric potential difference ΔVp to an offset voltage Vos1 by voltage dividing between the resistance R31 and the resistance R32 becomes an output voltage of the current to voltage conversion circuit 30. The offset voltage Vos1 is set such that a ratio between the resistance R31 and the resistance R32 is equivalent to a ratio between the pulse optical element ΔVp - sig and the undershoot ΔVp - under in the electric potential difference ΔVp. For example, when the pulse optical element ΔVp - sig and the undershoot ΔVp - under are equal in amounts, the offset voltage Vos1 is set to 2.5V when the power source voltage VCC is 5V.

Further, a current to voltage conversion rate of the current to voltage conversion circuit 30 is set to select a resistance value of the resistance R33 such that the output voltage is not saturated in the pulse optical element ΔVp - sig and the undershoot ΔVp - under. For example, when the pulse optical element ΔVp - sig and the undershoot ΔVp - under are equal in amounts, the electric potential difference ΔVp is widened to 2.5V when the power source voltage VCC is 5V. It should be noted that a condenser may be connected in parallel to the resistance R33 to form a low pass filter. In this case, a cutting-off frequency of the low pass filter is set higher than a cutting-off frequency of the prior current high pass filter circuit 20.

The output voltage in the current to voltage conversion circuit 30 is outputted to the voltage high pass filter circuit 40. The voltage high pass filter circuit 40 is formed of a condenser C41, a resistance R41 provided between the condenser C41 and the power source voltage VCC, and a resistance R42 provided between the condenser C41 and the ground GND. The voltage high pass filter circuit 40 further removes the outside optical element from the output voltage (light-receiving signal) of the current to voltage conversion circuit 30. Here, a capacity value Ca of the condenser C41 and a combined resistance value Ra by the resistances R41 and R42 are selected such that fc = 1/(2πCaRa) is established by setting a cutting-off frequency fc to a value allowing passing of alternate-current components by the pulse light from the light-emitting element 11. In this manner, a primary high pass voltage filter is configured by the combined resistance value Ra and the capacity value Ca.

The light-received current flowing in the photo diode PD11 is, as shown in FIG. 4A, formed in such a manner that pulse optical elements Fp by the light-emitting element 11 are superimposed on outside optical elements Fg, and an amplitude level of the outside optical element Fg is remarkably larger as compared to that of the pulse optical element Fp, and the output voltage which passes through the current high pass filter circuit 20 and is then converted in the current to voltage conversion circuit 30 is, as shown in Fig. 4B, formed such that the undershoot ΔVp - under is included, but the pulse optical element ΔVp - sig increases to largely attenuate a change of outside optical elements (low frequency alternate-current components ΔVg - ac). The light-receiving signal after the current to voltage conversion is offset by the offset voltage Vos1 by a voltage dividing ratio between the resistances R31 and R32, which is inputted to the non-reverse input terminal of the operational amplifier OPAMP31.

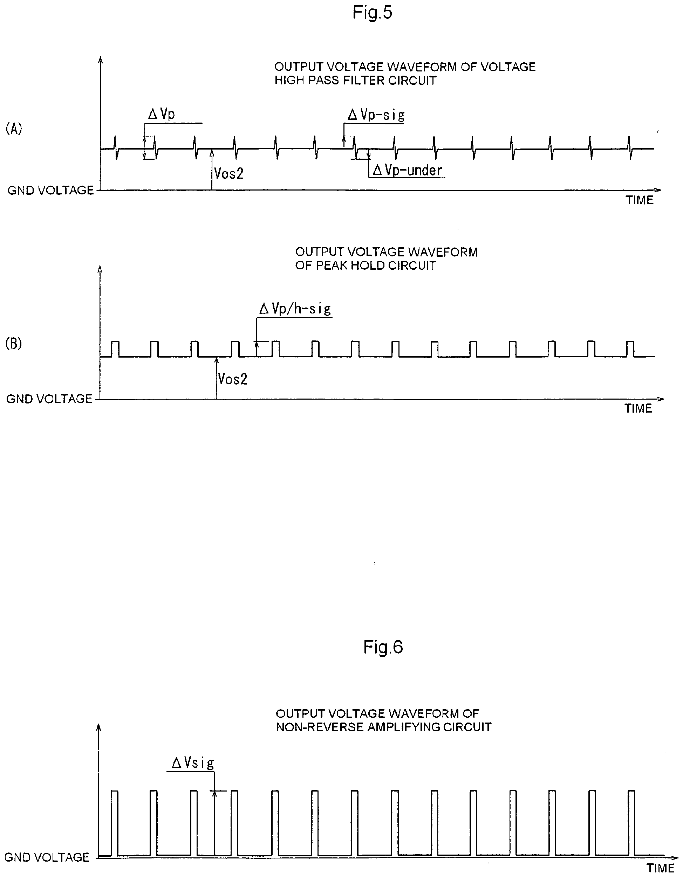

The offset unit 41 additionally attached to the voltage high pass filter circuit 40 is configured by in series connecting the resistance R41 connected to the power source voltage VCC to the resistance R42 connected to the ground GND, that is, the resistances R41 and R42 are used in common to the voltage high pass filter circuit 40. An output voltage (light-receiving signal) offset to a side of a high voltage from the GND electric potential is obtained in a connecting point between the resistances R41 and R42 as shown in Fig. 5A. An offset voltage Vos2 of the output voltage is set with an allowance by adjusting the voltage dividing ratio between the resistances R41 and R42 in such a manner that a lower end (minimum value) of the undershoot ΔVp - under is equal to or more than the minimum input voltage (for example, 0V) of the operational amplifier OPAMP51 in the peak hold circuit 50.

The peak hold circuit 50 is provided with the operational amplifier OPAMP51, and the output voltage of the voltage high pass filter circuit 40 is inputted as a light-receiving signal to a non-reverse input terminal of the operational amplifier OPAMP51. A diode D51 and a condenser C51 are in series provided in that order between an output terminal of the operational amplifier OPAMP51 and the ground GND, and a connecting point between the diode D51 and the condenser C51 is connected to a reverse input terminal of the operational amplifier OPAMP51. Further, a resistance R51 and a switch element S51 are in series provided between the connecting point between the diode D51 and the condenser C51, and the ground GND. The switch element S51 turns on at the time of receiving a peak hold release signal from a peak hold release signal control terminal p1 in the control unit 70, for discharging the condenser C51. The switch element S51 turns off at the time of receiving OFF of the peak hold release signal, and the condenser C51 is charged with the input voltage of the peak hold circuit 50.
The voltage to be inputted from the voltage high pass filter circuit 40 to the peak hold circuit 50 is a voltage obtained by adding the offset voltage Vos2 by the voltage offset unit 41 to the pulse optical element ΔVp - sig and the undershoot ΔVp - under, but a peak hold release signal from the control unit 70 changes from ON (release of peak hold) to OFF (hold of peal hold) at timing of a pulse light-emitting start in synchronization with timing of the pulse light-emitting of the light-emitting element 11 controlled by the control unit 70,and changes from OFF (hold of peak hold) to ON (release of peak hold) after a predetermined time for which at least the undershoot ΔVp - under is attenuated elapses. Thereby the voltage obtained by adding the voltage of the pulse optical element ΔVp - sig to the offset voltage Vos2 of the voltage offset unit 41 is peak-held without being affected by the undershoot ΔVp - undershoot. As a result, the light-receiving signal peak-held in the peak hold circuit 50 is, as shown in FIG. 5B, a signal found by extracting only the pulse optical element without distortion. It should be noted that the control unit 70 is provided with other control terminals such as a terminal of sending a control signal to the light-emitting element drive unit 15, which are omitted in illustration.

The non-reverse amplifying circuit 60 is provided with an operational amplifier OPAMP61, wherein a non-reverse input terminal thereof is connected to a connecting point between the diode D51 and the condenser C51, and the output of the peak hold circuit 50 is inputted to the operational amplifier OPAMP61. Resistances R61 and R62 are in series provided between the power source voltage VCC and the ground GND, and a connecting point between both the resistances is connected to a reverse input terminal of the operational amplifier OPAMP61, as well as a resistance R63 is connected between the reverse input terminal and the output terminal. Here, in the non-reverse amplifying circuit 60, the condenser C51 in the peak hold circuit 50 is connected to the non-reverse input terminal of the operational amplifier OPAMP61, and an input impedance of the non-reverse input terminal is high. Therefore the peak of the voltage can be held without flowing out the current from the condenser C51 to the non-reverse amplifying circuit 60, therefore without loads to the peak hold circuit 50.

Further, an offset calibrating unit 61 can be realized by adjusting a voltage dividing ratio between the resistances R61 and R62 and can absorb the offset voltage Vos2 by the resistances R41 and R42 in the prior offset unit 41, outputting an amplifying peak value ΔVsig as an amplitude value from the GND electric potential from the output terminal of the operational amplifier OPAMP61 as shown in Fig. 6. In addition, by setting a ratio between a resistance value of a resistance 63 and a parallel combined resistance value between the resistances R61 and R62, an amplitude level can be also made to a desired level in such a manner as to be attenuated within an output voltage range of the operational amplifier OPAMP61 without distortion.

The output terminal of the operational amplifier OPAMP61 is connected to an A/D input terminal p2 of the control unit 70. In the control unit 70, peak values of the light-receiving signal are sampled by predetermined intervals, which are subjected to A/D conversion to generate rain drop information. A rainfall situation is determined based upon the rain drop information to send a wiper control signal for controlling ON/OFF of a wiper or a wiper speed from a wiper control signal output terminal p3 to a wiper control device (not shown) or the like.

In the present embodiment, at least one of the current high pass filter circuit 20 and the voltage high pass filter circuit 40 corresponds to a high pass filter circuit in the invention defined in claim 1, the voltage high pass filter circuit 40 corresponds to a high pass filter circuit in the invention defined in claim 3 and a latter high pass filter circuit in the invention defined in claim 5, and the current high pass filter circuit 20 corresponds to a high pass filter circuit in the invention defined in claim 4 and a former high pass filter circuit in the invention defined in claim 5. The control unit 70 corresponds to state determining means. The voltage offset unit 40 corresponds to offset means in the invention defined in claim 2, and particularly the resistance R41 corresponds to a first resistance, and the resistance R42 corresponds to a second resistance. The non-reverse input terminal of the operational amplifier OPAMP51 corresponds to a light-receiving signal input terminal of the peak hold circuit. The voltage offset unit 31 corresponds to offset means in the invention defined in claim 4, and particularly the resistance R31 corresponds to a first resistance, and the resistance R32 corresponds to a second resistance. The non-reverse input terminal of the operational amplifier OPAMP31 corresponds to a reference signal input terminal of the current to voltage conversion circuit. In addition, the resistance R61 corresponds to a third resistance in the invention defined in claim 6, and the resistance R62 corresponds to a fourth resistance.

The present embodiment is configured as described above, wherein the rain drop detecting device 1 including the light-emitting element 11 for emitting pulse light toward a detection surface S on a surface of the window shield W for a vehicle, and the photo diode PD11 as the light-receiving element 12 for receiving light reflected on the detection surface, detecting rain drops based upon output of the photo diode PD11, comprises the current to voltage conversion circuit 30 for converting the light-receiving signal, in which the outside optical element is superimposed on the pulse optical element outputted from the photo diode PD11, from current to voltage, the current high pass filter circuit 20 and the voltage high pass filter circuit 40 for extracting the pulse optical element from the light-receiving signal, the peak hold circuit 50 for peak-holding the light-receiving signal having passed through the current to voltage conversion circuit 30 and each of the high pass filter circuits 20 and 40 to output the peak value ΔVp/h - sig, the non-reverse amplifying circuit 60 for amplifying the output of the peak hold circuit 50, the control unit 70 for determining an attaching state of rain drops based upon the amplifying peak value ΔVsig of the light-receiving signal amplified in the non-reverse amplifying circuit 60 to generate the rain drop information, and the offset unit 41 for offsetting the light-receiving signal such that the undershoot generated by the passing of the voltage through the high pass filter circuit 40 is equal to or more than the minimum input voltage possibly inputted to the peak hold circuit 50, wherein the non-reverse amplifying circuit 60 is provided with the offset calibrating unit 61 to once more offset the voltage in a direction of absorbing the aforementioned offset, amplifying the output of the peak hold circuit 50. By providing the current high pass filter circuit 20 prior to the current to voltage conversion circuit 30, the current to voltage conversion rate in the current to voltage conversion circuit 30 can be increased without saturation by the outside light, and the amplifying circuit having a high amplifying rate required prior to the peak hold circuit 50 becomes unnecessary. Therefore there exists no adverse effect of the circuit noises which can be generated in the amplifying circuit having the high amplifying rate. In addition, the voltage high pass filter circuit 40 is also provided after the current to voltage conversion circuit 30, so that a reduction of the outside optical element can be furthermore ensured.

In addition, the voltage offset unit 41 in the voltage high pass filter circuit 40 and the offset calibrating unit 61 in the non-reverse amplifying circuit 60 are provided, and even if the light-receiving signal (pulse optical elements ΔVp - sig) inputted to the peak hold circuit 50 is offset in voltage, the offset voltage can be absorbed. Therefore the following components which are conventionally required prior to the input to the peak hold circuit 50 become unnecessary. That is, the high pass filter biased to the ground voltage as a negative power source of the peak hold circuit, the blocking circuit such as the analogue switch for preventing the undershoot generated at the time the pulse signal passes through the high pass filter from being equal to or less than the minimum input voltage (equal to or less than the ground electric potential) of the peak hold circuit, and the buffer circuit or the amplifying circuit in a case where the high pass filter and the blocking circuit are not connected directly to the peak hold circuit become unnecessary. In addition, by providing the non-reverse amplifying circuit 60 after the peak hold circuit 50, the voltage buffer which is conventionally required after the peak hold circuit 50 becomes unnecessary. As described above, since the light-receiving signal having a few noises can be inputted to the control unit 70, the attaching state of the rain drops can be detected with high accuracy and the inexpensive configuration can be made.

Since the offset calibrating unit 61 in the non-reverse amplifying circuit 60 can once more offset the inputted voltage in a direction of absorbing the offset by the voltage offset unit 41 in the voltage high pass filter circuit 40 to amplify the output of the peak hold circuit 50, a peak signal value can be outputted as an amplifying amplitude value from the ground.

The voltage offset unit 41 in the voltage high pass filter circuit 40 is configured such that the resistance R41 connected to the power source voltage and the resistance R42 connected to the ground are in series arranged and the connecting point to the resistance R41 is connected to the non-reverse input terminal of the operational amplifier OPAMP51 in the peak hold circuit 50. Therefore the configuration of the voltage offset unit 41 is simpler as compared to the configuration of blocking input of the undershoot to the peak hold circuit 50 using an expensive analogue switch, and can be commonly used also as filter constant formation of the voltage high pass filter circuit 40. Accordingly even as compared to the conventional filter biased to the ground electric potential, the voltage offset unit 41 can be inexpensively configured by adding a single resistance.

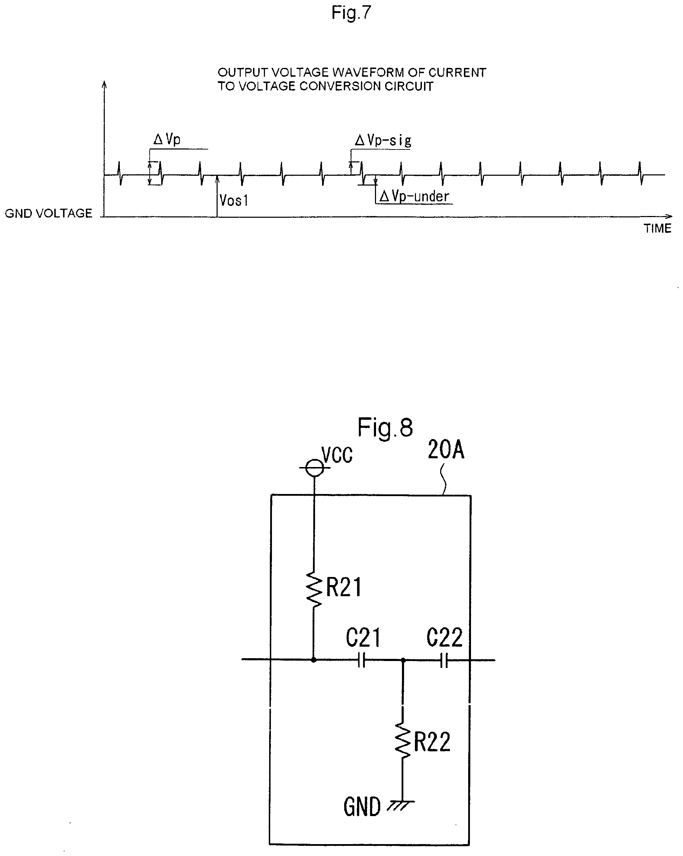

It should be noted that in the present embodiment, the voltage high pass filter circuit 40 is provided after the current to voltage conversion circuit 30 in addition to the current high pass filter circuit 20, but when the low frequency alternate-current components ΔVg - ac appearing in FIG. 4B disappear, and as shown in FIG. 7, the outside optical elements are sufficiently removed, the voltage high pass filter circuit 40 and the offset unit 41 may be omitted. In this case, the offset voltage Vos1 by the offset unit 31 instead of the offset unit 41, particularly the lower end (minimum value) of the undershoot in the output voltage in the current to voltage conversion circuit 30 may be set to a value equal to or more than the minimum input voltage of the operational amplifier OPAMP51 in the peak hold circuit 50.

In addition, the current high pass filter circuit 20 in the present embodiment is shown as the primary high pass filter, but, as shown in Fig.8, when there is provided a current high pass filter circuit 20A in which a condenser C22 is provided after the condenser C21 (in a side of the current to voltage conversion circuit 30) and a resistance R22 is provided between a connecting point between the condenser C21 and the condenser C22, and the ground GND, a secondary high pass filter can be configured with ease and at low costs, and performance for attenuating outside optical elements as noises improves corresponding to the order increase.

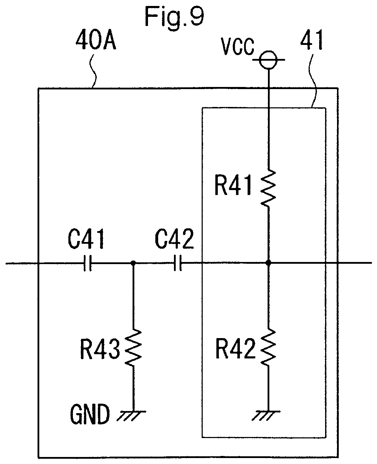

In addition, the voltage high pass filter circuit 40 in the present embodiment is also shown as the primary high pass filter, but, as shown in Fig.9, when there is provided a voltage high pass filter circuit 40A in which a condenser C42 is provided between the connecting point between the resistance R41 and the resistance R42, and the condenser C41, and a resistance R43 is provided between a connecting point between the condenser C41 and a condenser C42, and the ground GND, a secondary high pass filter can be likewise configured with ease and at low costs, and performance for attenuating outside optical elements as noises further improves corresponding to the order increase. It should be noted that when the voltage high pass filter circuit 40 (40A) is configured of a first- or more-order of the high pass filter, a band pass filter having a low pass filter of a cutting-off frequency larger than that of the high pass filter may be used.

In the present embodiment, an example of using the rain drop detecting device is explained, but the present invention is not limited thereto, but can be applied to various types of state detecting devices for detecting a state of the detection target based upon a light-receiving signal under circumstances where outside light exists.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.

### Description of Reference Signs

- 1: RAIN DROP DETECTING DEVICE
- 2: CASING
- 3: FRONT WALL
- 4: REAR WALL
- 5: PRISM
- 6a, 6b: LENS PORTION
- 10: SENSOR UNIT
- 11: LIGHT-EMITTING ELEMENT
- 12: LIGHT-RECEIVING ELEMENT
- 15: LIGHT-EMITTING ELEMENT DRIVE UNIT
- 20, 20A: CURRENT HIGH PASS FILTER CIRCUIT
- 30: CURRENT TO VOLTAGE CONVERSION CIRCUIT
- 31: VOLTAGE OFFSET UNIT
- 40, 40A: VOLTAGE HIGH PASS FILTER CIRCUIT
- 41: VOLTAGE OFFSET UNIT
- 50: PEAK HOLD CIRCUIT
- 60: NON-REVERSE AMPLIFYING CIRCUIT
- 61: OFFSET CALIBRATING UNIT
- 70: CONTROL UNIT
- C21, C22, C41, C42, C51: CONDENSER
- D51: DIODE
- Fp: PULSE OPTICAL ELEMENT
- Fg: OUTSIDE OPTICAL ELEMENT
- GND: GROUND
- OPAMP31, OPAMP51, OPAMP61: OPERATIONAL AMPLIFIER
- PD11: PHOTO DIODE
- R21, R22, R31, R32, R33, R34: RESISTANCE
- R41, R42, R43, R51, R61, R62, R63: RESISTANCE
- S51: SWITCH ELEMENT
- P1: PEAK HOLD RELEASE SIGNAL CONTROL TERMINAL
- P2: A/D INPUT TERMINAL
- P3: WIPER CONTROL SIGNAL OUTPUT TERMINAL
- VCC: POWER SOURCE VOLTAGE
- Vos1, Vos2: OFFSET VOLTAGE
- ΔVg - ac: LOW FREQUENCY ALTERNATE-CURRENT COMPONENT
- ΔVp: ELECTRIC POTENTIAL DIFFERENCE
- ΔVp - sig: PULSE LIGHT ELEMENT
- ΔVp - under: UNDERSHOOT
- ΔVp/h - sig: PEAK VALUE
- ΔVsig: AMPLIFYING PEAK VALUE

### Description of Reference Signs

- 1: RAIN DROP DETECTING DEVICE
- 2: CASING
- 3: FRONT WALL
- 4: REAR WALL
- 5: PRISM
- 6a, 6b: LENS PORTION
- 10: SENSOR UNIT
- 11: LIGHT-EMITTING ELEMENT
- 12: LIGHT-RECEIVING ELEMENT
- 15: LIGHT-EMITTING ELEMENT DRIVE UNIT
- 20, 20A: CURRENT HIGH PASS FILTER CIRCUIT
- 30: CURRENT TO VOLTAGE CONVERSION CIRCUIT
- 31: VOLTAGE OFFSET UNIT
- 40, 40A: VOLTAGE HIGH PASS FILTER CIRCUIT
- 41: VOLTAGE OFFSET UNIT
- 50: PEAK HOLD CIRCUIT
- 60: NON-REVERSE AMPLIFYING CIRCUIT
- 61: OFFSET CALIBRATING UNIT
- 70: CONTROL UNIT
- C21, C22, C41, C42, C51: CONDENSER
- D51: DIODE
- Fp: PULSE OPTICAL ELEMENT
- Fg: OUTSIDE OPTICAL ELEMENT
- GND: GROUND
- OPAMP31, OPAMP51, OPAMP61: OPERATIONAL AMPLIFIER
- PD11: PHOTO DIODE
- R21, R22, R31, R32, R33, R34: RESISTANCE
- R41, R42, R43, R51, R61, R62, R63: RESISTANCE
- S51: SWITCH ELEMENT
- P1: PEAK HOLD RELEASE SIGNAL CONTROL TERMINAL
- P2: A/D INPUT TERMINAL
- P3: WIPER CONTROL SIGNAL OUTPUT TERMINAL
- VCC: POWER SOURCE VOLTAGE
- Vos1, Vos2: OFFSET VOLTAGE
- ΔVg - ac: LOW FREQUENCY ALTERNATE-CURRENT COMPONENT
- ΔVp: ELECTRIC POTENTIAL DIFFERENCE
- ΔVp - sig: PULSE LIGHT ELEMENT
- ΔVp - under: UNDERSHOOT
- ΔVp/h - sig: PEAK VALUE
- ΔVsig: AMPLIFYING PEAK VALUE

## Claims

1. A state detecting device comprising:
a light-emitting element (11) for outputting pulse light; and
a light-receiving element (12) for receiving pulse light emitted from the light-emitting element, wherein a state of a detection target, in particular a rain drop, existing between the light-emitting element (11) and the light-receiving element (12) is detected based upon an electrical light-receiving signal outputted from the light-receiving element (12), in which outside optical signal elements (Fg) are superimposed on pulse optical signal elements (Fp),
the pulse optical signal elements (Fp) being a component of the electrical light-receiving signal resulting from the influence of the state of the detection target on the electrical light-receiving signal,
and the outside optical signal elements (Fg) being a component of the electrical light-receiving signal resulting from the temporal alteration of outside influences other than the state of the detection target on the electrical light-receiving signal,
the outside optical signal elements (Fg) being in a lower frequency region than the pulse optical signal elements (Fp),
the state detecting device comprising:
a current to voltage conversion circuit (30) for converting the electrical light-receiving signal from current to voltage;
a high pass filter circuit (20, 20A; 40, 40A) for extracting the pulse optical signal elements (Fp) from the electrical light-receiving signal, the high pass filter circuit (20, 20A; 40, 40A) generating undershoots (ΔVp -under) by the passing of the electrical light-receiving signal through the high pass filter circuit;
a peak hold circuit (50) for peak-holding the electrical light-receiving signal passing through the current to voltage conversion circuit (30) and the high pass filter circuit (40, 40A);
a non-reverse amplifying circuit (60) for amplifying the output of the peak hold circuit (50);
state determining means (70) for determining the state of the detection target based upon a peak value (ΔVsig) of the electrical light-receiving signal amplified in the non-reverse amplifying circuit; and
offset means (31, 41) for offsetting the electrical light-receiving signal by adding an offset voltage such that the minimum voltage of an undershoot (ΔVp -under) generated by the passing of the electrical light-receiving signal through the high pass filter circuit (20, 20A; 40, 40A) is equal to or greater than a minimum input voltage which can be inputted to the peak hold circuit (50),
wherein
the non-reverse amplifying circuit (60) includes an offset calibrating unit (61) to offset the electrical light-receiving signal in an opposite direction for absorbing the offset voltage of the electrical light-receiving signal, thus amplifying the output of the peak hold circuit (50) and outputting an amplifying peak value (ΔVsig).

2. A state detecting device according to claim 1,
wherein
the offset means is configured such that a first resistance (R31, R41) connected to the power source voltage (VCC) and a second resistance (R32, R42) connected to the ground (GND) are arranged in series, and a connecting point between the first resistance and the second resistance is connected to a electrical light-receiving signal input terminal of the peak hold circuit (50).

3. A state detecting device according to claim 2,
wherein
the high pass filter circuit (40, 40A) is provided between the current to voltage conversion circuit (30) and the peak hold circuit (50), and is configured of a condenser (C41) and a first resistance (R41) connected to the power source voltage (VCC) and a second resistance (R42) connected to the ground (GND), the first and second resistances (R41, R42 being arranged in series, wherein the first and second resistances (R41, R42) are the first and second resistances of the offset means.

4. A state detecting device according to claim 1,
wherein
the high pass filter circuit (20, 20A) is provided only before the current to voltage conversion circuit (30),
the offset means is configured such that a first resistance connected to the power source voltage and a second resistance connected to the ground are arranged in series, and
a connecting point between the first resistance and the second resistance is connected to a reference signal input terminal of the current to voltage conversion circuit (30).

5. A state detecting device according to claim 1 or 2,
wherein
the high pass filter circuit (20, 20A; 40, 40A) includes a former high pass filter circuit (20, 20A) provided before the current to voltage conversion circuit (30), and a latter high pass filter circuit (40, 40A) provided between the current to voltage conversion circuit (30) and the peak hold circuit (50), and the latter high pass filter circuit (40, 40A) is configured of a condenser (C41) and a first resistance (R41) connected to the power source voltage (VCC) and a second resistance (R42) connected to the ground (GND), the first and second resistances (R41, R42 being arranged series, wherein the first and second resistances (R41, R42) are the first and second resistances of the offset means.

6. A state detecting device according to any of claims 1 to 5,
wherein
an operational amplifier (OPAMP) is provided in the non-reverse amplifying circuit (60),
an output signal terminal in the peak hold circuit (50) is connected to a non-reverse input terminal in the operational amplifier (OPAMP),
a third resistance (R) connected between a reverse input terminal in the operational amplifier (OPAMP) and the power source voltage (VCC) and a fourth resistance (R) connected to the ground (GND) are arranged in series, and the third resistance (R) and the fourth resistance (R) form the offset calibrating unit (61).

7. A state detecting device according to any of claims 1 to 6,
wherein
the light-emitting element (11) and the light-receiving element (12) are arranged such that the light-emitting element (11) emits pulse light toward a detection surface of a window shield surface for a vehicle and the light-receiving element (12) receives the light reflected on the detection surface, and
the state determining means determines an attaching state of rain drops on the window shield based upon a peak value of the electrical light-receiving signal.

## Patentansprüche

1. Eine Zustandserfassungsvorrichtung aufweisend:
ein Licht emittierendes Element (11) zum Ausgeben von gepulsten Licht und
ein Licht empfangendes Element (12) zum Empfangen von gepulsten Licht von dem Licht emittierenden Element, wobei der Zustand eines zu erfassenden Objektes, insbesondere eines Regentropfens, das zwischen dem Licht emittierenden Element (11) und dem Licht empfangenden Element (12) existiert, auf der Grundlage eines elektrischen Licht-Empfangssignals, das von dem Licht empfangenden Element (12) ausgegeben wird, erfasst wird, wobei in dem elektrischen Licht-Empfangssignal äußere optische Signalelemente (Fg) gepulsten optischen Signalelementen (Fp) überlagert sind;
wobei die gepulsten optischen Signalelemente (Fp) eine Komponente des elektrischen Licht-Empfangssignals sind, die aus dem Einfluss des Zustandes des zu erfassenden Objekts auf das elektrische Licht-Empfangssignal resultieren,
und wobei die äußeren optischen Signalelemente (Fg) eine Komponente des elektrischen Licht-Empfangssignals sind, die aus der zeitlichen Änderung der äußeren Einflüsse, die von dem Zustand des zu erfassenden Objektes verschieden sind, auf das elektrische Licht-Empfangssignal resultieren,
wobei die äußeren optischen Signalelemente (Fg) in einem niedrigeren Frequenzbereich als die gepulsten optischen Signalelemente (Fp) sind, wobei die Zustandserfassungsvorrichtung aufweist:
einen Strom in Spannung Umwandlungsschaltkreis (30) zum Umwandeln des elektrischen Licht-Empfangssignals von Strom in Spannung;
einen Hochpassfilter-Schaltkreis (20, 20A; 40, 40A) zum Extrahieren der gepulsten optischen Signalelemente (Fp) von dem elektrischen Licht-Empfangssignal, wobei der Hochpassfilter-Schaltkreis (20, 20A; 40, 40A) Unterschreitung (ΔVp-unter) durch das Passieren des elektrischen Licht-Empfangssignal durch den Hochpassfilter-Schaltkreis generiert;
einen Spitzenhalte-Schaltkreis (50) zum Halten der Spitze des elektrischen Licht-Empfangssignals, das den Strom in Spannung Umwandlungsschaltkreis (30) und den Hochpassfilter-Schaltkreis (40, 40A) passiert;
einen nicht-invertierenden Verstärkerschaltkreis (60) zum Verstärken des Ausgangs des Spitzenhalte-Schaltkreises (50);
Zustandsbestimmungsmittel (70) zum Bestimmen des Zustandes des zu erfassenden Objektes auf der Grundlage eines Spitzenwertes (ΔVsig) des von dem nicht-invertierenden Verstärkerschaltkreis verstärkten elektrischen Licht-Empfangssignals; und
Offset-Mittel (31, 41) zum Ausgleich des elektrischen Licht-Empfangssignals durch das Addieren einer Offset-Spannung derart, dass die minimale Spannung einer durch das Passieren des elektrischen Licht-Empfangssignals durch den Hochpassfilter-Schaltkreis (20, 20A; 40, 40A) erzeugte Unterschreitung (ΔVp-unter) gleich oder größer ist als eine minimale Eingangsspannung, die in den Spitzenhalte-Schalkreis (50) eingegeben werden kann,
wobei
der nicht-invertierende Verstärkerschaltkreis (60) eine OffsetKalibriereinheit (61) zum Ausgleich des elektrischen Licht-Empfangssignals in eine entgegengesetzte Richtung umfasst, um die Offsetspannung des elektrischen Licht-Empfangssignals zu absorbieren, so dass der Ausgang des Spitzenhalte-Schalkreises (50) verstärkt wird und ein verstärkter Spitzenwert (ΔVsig) ausgegeben wird.

2. Eine Zustandserfassungsvorrichtung nach Anspruch 1,
wobei
die Offsetmittel derart konfiguriert sind, dass ein erster Widerstand (R31, R41), der mit der Spannungsversorgung (VCC) verbunden ist, und ein zweiter Widerstand (R32, R42), der mit der Erde (GND) verbunden ist, in Reihe geschaltet sind, und ein Verbindungspunkt zwischen dem ersten Widerstand und dem zweiten Widerstand mit einem Eingangsanschluss des Spitzenhalte-Schaltkreises (50) für ein elektrisches Licht-Empfangssignal verbunden ist.

3. Eine Zustandserfassungsvorrichtung nach Anspruch 2,
wobei
der Hochpassfilter-Schaltkreis (40, 40A) zwischen dem Strom in Spannung Umwandlungsschaltkreis (30) und dem Spitzenhalte-Schalkreis (50) vorgesehen ist und als ein Kondensor (C41) und ein erster Widerstand (R41), der mit der Spannungsversorgung (VCC) verbunden ist, und ein zweiter Widerstand (R42), der mit der Erde (GND) verbunden ist, ausgebildet ist, wobei der erste und zweiter Widerstand (R41, R41) in Reihe geschaltet sind, wobei der erste und zweite Widerstand (R41, R41) der erste und zweite Widerstand der Offsetmittel ist.

4. Eine Zustandserfassungsvorrichtung nach Anspruch 1,
wobei
der Hochpassfilter-Schaltkreis (20, 20A) nur vor dem Strom in Spannung Umwandlungsschaltkreis (30) vorgesehen ist,
die Offsetmittel derart ausgebildet sind, dass ein erster Widerstand, der mit der Spannungsversorgung verbunden ist, und ein zweiter Widerstand, der mit der Erde verbunden ist, in Reihe geschaltet sind, und
ein Verbindungspunkt zwischen dem ersten Widerstand und dem zweiten Widerstand mit einem Referenzsignal-Eingangsanschluss des Strom in Spannung Umwandlungsschaltkreises (30) verbunden ist.

5. Eine Zustandserfassungsvorrichtung nach Anspruch 1 oder 2,
wobei
der Hochpassfilter-Schaltkreis (20, 20A; 40, 40A) einen vorausgehenden Hochpassfilter-Schaltkreis (20, 20A), der vor dem Strom in Spannung Umwandlungsschaltkreis (30) angeordnet ist, und einen nachfolgenden Hochpassfilter-Schaltkreis (40, 40A), der zwischen dem Strom in Spannung Umwandlungsschaltkreis (30) und dem Spitzenhalte-Schaltkreis (50) angeordnet ist, und
der nachfolgende Hochpassfilter-Schaltkreis (40, 40A) als ein Kondensor (C41) und ein erster Widerstand (R41), der mit der Spannungsversorgung (VCC) verbunden ist, und ein zweiter Widerstand (R42), der mit der Erde (GND) verbunden ist, ausgebildet ist, wobei der erste und zweiter Widerstand (R41, R41) in Reihe geschaltet sind, wobei der erste und zweite Widerstand (R41, R41) der erste und zweite Widerstand der Offsetmittel ist.

6. Eine Zustandserfassungsvorrichtung nach einem der Ansprüche 1 bis 5,
wobei
ein Operationsverstärker (OPAMP) in dem nicht-invertierenden Verstärkerschaltkreis (60) vorgesehen ist,
ein Ausgangssignalanschluss in dem Spitzenhalte-Schaltkreis (50) mit einem nicht-invertierenden Eingangsanschluss in dem Operationsverstärker (OPAMP) verbunden ist,
ein dritter Widerstand (R), der zwischen einem invertierenden Eingangsanschluss in dem Operationsverstärker (OPAMP) und der Spannungsversorgung (VCC) geschaltet ist, und ein vierter Widerstand (R), der mit der Erde (GND) verbunden ist, in Reihe geschaltet sind, und der dritte Widerstand (R) und der vierte Widerstand (R) die Offsetkalibriereinheit (61) bilden.

7. Eine Zustandserfassungsvorrichtung nach einem der Ansprüche 1 bis 6,
wobei
das Licht emittierende Element (11) und das Licht empfangende Element (12) derart angeordnet sind, dass das Licht emittierende Element (11) gepulstes Licht auf eine Erfassungsoberfläche einer Windschutzscheibe eines Fahrzeugs emittiert und dass das Licht empfangende Element (12) das von der Erfassungsoberfläche reflektierte Licht empfängt, und
die Zustandserfassungsmittel einen Zustand des Auftreffens von Regentropfen auf die Windschutzscheibe auf der Grundlage eines Spitzenwertes des elektrischen Licht-Empfangssignals bestimmt.

## Revendications

1. Dispositif de détection d'état comprenant :
un élément émetteur de lumière (11) pour générer une lumière puisée :
et
un élément récepteur de lumière (12) pour recevoir une lumière pulsée générée par l'élément émetteur de lumière, dans lequel un état d'une cible de détection, en particulier d'une goutte de pluie, existant entre l'élément émetteur de lumière (11) et l'élément récepteur de lumière (12) est détecté sur la base d'un signal de réception de lumière électrique généré par l'élément récepteur de lumière (12), dans lequel des éléments de signal optique extérieur (Fg) sont superposés sur des éléments de signal optique pulsé (Fp),
les éléments de signal optique pulsé (Fp) étant un composant du signal de réception de lumière électrique résultant de l'influence de l'état de la cible de détection sur le signal de réception de lumière électrique,
et les éléments de signal optique extérieur (Fg) étant un composant du signal de réception de lumière électrique résultant de l'altération temporelle d'influences extérieures autres que l'état de la cible de détection sur le signal de réception de lumière électrique,
les éléments de signal optique extérieur (Fg) étant dans une région de fréquence inférieure à celle des éléments de signal optique pulsé (Fp),
le dispositif de détection d'état comprenant :
un circuit de conversion courant-tension (30) pour convertir le signal de réception de lumière électrique de courant en tension ;
un circuit de filtre passe-haut (20, 20A ; 40, 40A) pour extraire les éléments de signal optique pulsé (Fp) du signal de réception de lumière électrique, le circuit de filtre passe-haut (20, 20A ; 40, 40A) générant des sous-passements (ΔVp-sous) par le passage du signal de réception de lumière électrique à travers le circuit de filtre passe-haut ;
un circuit de maintien de crête (50) pour maintenir une crête du signal de réception de lumière électrique passant à travers le circuit de conversion courant-tension (30) et le circuit de filtre passe-haut (40, 40A) ;
un circuit d'amplification non inverse (60) pour amplifier la sortie du circuit de maintien de crête (50) ;
des moyens de détermination d'état (70) pour déterminer l'état de la cible de détection sur la base d'une valeur de crête (ΔVsig) du signal de réception de lumière électrique amplifié dans le circuit d'amplification non inverse ; et
des moyens de décalage (31, 41) pour décaler le signal de réception de lumière électrique par addition d'une tension de décalage de sorte que la tension minimum d'un sous-passement (ΔVp-sous) généré par le passage du signal de réception de lumière électrique à travers le circuit de filtre passe-haut (20, 20A ; 40, 40A) est égale ou supérieure à une tension d'entrée minimum qui peut être entrée au circuit de maintien de crête (50),
dans lequel
le circuit d'amplification non inverse (60) comprend une unité de calibrage de décalage (61) pour décaler le signal de réception de lumière électrique dans une direction opposée pour absorber la tension de décalage du signal de réception de lumière électrique, amplifiant ainsi la sortie du circuit de maintien de crête (50) et générant une valeur de crête d'amplification (ΔVsig).

2. Dispositif de détection d'état selon la revendication 1,
dans lequel
les moyens de décalage sont configurés de sorte qu'une première résistance (R31, R41) reliée à la tension de source d'alimentation (VCC) et une deuxième résistance (R32, R42) reliée à la terre (GND) sont agencées en série,
et un point de liaison entre la première résistance et la deuxième résistance est relié à un terminal d'entrée de signal de réception de lumière électrique du circuit de maintien de crête (50).

3. Dispositif de détection d'état selon la revendication 2,
dans lequel
le circuit de filtre passe-haut (40, 40A) est prévu entre le circuit de conversion courant-tension (30) et le circuit de maintien de crête (50), et est constitué d'un condenseur (C41) et d'une première résistance (R41) reliée à la tension de source d'alimentation (VCC) et d'une deuxième résistance (R42) reliée à la terre (GND), les première et deuxième résistances (R41, R42) étant agencées en séries, dans lequel les première et deuxième résistances (R41, R42) sont les première et deuxième résistances des moyens de décalage.

4. Dispositif de détection d'état selon la revendication 1,
dans lequel
le circuit de filtre passe-haut (20, 20A) est prévu seulement avant le circuit de conversion courant-tension (30),
les moyens de décalage sont configurés de sorte qu'une première résistance reliée à la tension de source d'alimentation et une deuxième résistance reliée à la terre sont agencées en série, et
un point de liaison entre la première résistance et la deuxième résistance est relié à une borne d'entrée de signal de référence du circuit de conversion courant-tension (30).

5. Dispositif de détection d'état selon la revendication 1 ou 2,
dans lequel
le circuit de filtre passe-haut (20, 20A ; 40, 40A) comprend un premier circuit de filtre passe-haut (20, 20A) prévu avant le circuit de conversion courant-tension (30), un second circuit de filtre passe-haut (40, 40A) prévu entre le circuit de conversion courant-tension (30) et le circuit de maintien de crête (50), et
le second circuit de filtre passe-haut (40, 40A) est constitué d'un condensateur (C41) et d'une première résistance (R41) reliée à la tension de source d'alimentation (VCC) et d'une deuxième résistance (R42) reliée à la terre (GND), les première et deuxième résistances (R41, R42) étant agencées en série, dans lequel les première et deuxième résistances (R41, R42) sont des première et deuxième résistances des moyens de décalage.

6. Dispositif de détection d'état selon l'une quelconque des revendications 1 à 5,
dans lequel
un amplificateur opérationnel (OPAMP) est prévu dans le circuit d'amplification non inverse (60),
un terminal de signal de sortie dans le circuit de maintien de crête (50) est relié à un terminal d'entrée non inverse dans l'amplificateur opérationnel (OPAMP),
une troisième résistance (R) reliée entre un terminal d'entrée inverse dans l'amplificateur opérationnel (OPAMP) et la tension de source d'alimentation (VCC) et une quatrième résistance (R) reliée à la terre (GND) sont agencées en séries, et
la troisième résistance (R) et la quatrième résistance (R) forment l'unité de calibrage de décalage (61).

7. Dispositif de détection d'état selon l'une quelconque des revendications 1 à 6,
dans lequel
l'élément émetteur de lumière (11) et l'élément récepteur de lumière (12) sont agencés de sorte que l'élément émetteur de lumière (11) émet une lumière pulsée vers une surface de détection d'une surface d'écran de fenêtre et l'élément récepteur de lumière (12) reçoit la lumière réfléchie sur la surface de détection, et
les moyens de détermination d'état déterminent un état d'attachement des gouttes de pluie sur l'écran de fenêtre sur la base d'une valeur de crête du signal de réception de lumière électrique.
